# EUROPEAN PATENT APPLICATION

(11) **EP 3 797 975 A1**
(43) Date of publication of application: **31.03.2021**
(21) Application number: 19199972.1
(22) Date of filing: 26.09.2019
(51) Int. Cl.: B29C 70/20, B29C 70/32, B29C 70/34, B29C 70/46, B65D 8/00, B29L 31/00

(54) **COMPOSITE CONTAINER AND METHOD TO MANUFACTURE COMPOSITE CONTAINER**

(71) Applicant: Corex Materials Corporation, Taichung City 42756 (TW)
(72) Inventor: CHIU, Shao-Chen, 42756 Taichung City (TW); LIN, Tsung-Ying, 42756 Taichung City (TW); LIN, Yu-Chen, 42756 Taichung City (TW); LIU, Cheng-Chiu, 42756 Taichung City (TW); TSAI, Cheng-Chun, 42756 Taichung City (TW)
(74) Representative: Lang, Christian

(57) **Abstract**

A composite container includes a barrel (10), a bottom cover (20), and a top cover (30). The barrel is formed by thermoforming of a rolled-up first plate (100) composed of laminated prepregs (100'). The bottom cover is formed by thermoforming of a second plate (200) composed of laminated prepregs. The top cover is formed by thermoforming of a third plate (300) composed of laminated prepregs. The bottom cover includes a first bottom (21) and a first flange (22). The top cover includes a second bottom (31) and a second flange (32). The second bottom is formed with a through hole (33). The bottom cover and the top cover are arranged at two ends of the barrel respectively, and the first flange and the second flange are positioned to the peripheral wall of the barrel by thermoforming.

## Description

### BACKGROUND OF THE INVENTION

### Field of the Invention

The present invention relates to a composite container and a method to manufacture composite container.

### Description of the Prior Art

A conventional barrel-shaped composite container is manufactured by twining composite material fiber on a core mold, as shown in patent publication TW 201332752.

However, for the smooth extension of the fiber, the bottom and the top of the container are usually sphere-shaped, and the container is unable to have a precise or delicate contour. Besides, the twined fibers make the surface of the container rough and have a lot of slits. In addition, the procedure is time-consuming, and the equipments are expensive so that the cost of the container is too high.

On the other hand, the core mold is usually unable to be removed, so the container is heavy.

### SUMMARY OF THE INVENTION

The main object of the present invention is to provide a composite container which is easy to manufacture and costs less. In addition, the composite container has a precise shape and size, and the surface is smooth. Also, the composite container is advantageous in mass production.

To achieve the above and other objects, the composite container of the present invention includes a barrel, a bottom cover, and a top cover.

The barrel is hollow barrel-shaped and formed by a rolled-up first plate. The first plate is formed by a plurality of laminated prepreg sheets arranged in different orientations wherein each of the prepreg sheets is composed a plurality of fibers and is impregnated in thermoplastics so that the fibers in the prepreg sheets are arranged in different orientations. The first plate is processed by thermoforming in mold to form the barrel. The bottom cover is formed by a second plate and includes a first bottom and a first flange. The first flange surrounds the first bottom. The second plate is formed by a plurality of laminated prepreg sheets arranged in different orientations wherein each of the prepreg sheets is composed a plurality of fibers and is impregnated in thermoplastics so that the fibers in the prepreg sheets are arranged in different orientations. The second plate is processed by thermoforming in mold to form the bottom cover. The top cover is formed by a third plate and includes a second bottom and a second flange. The second flange surrounds the second bottom. The third plate is formed by a plurality of laminated prepreg sheets arranged in different orientations wherein each of the prepreg sheets is composed a plurality of fibers and is impregnated in thermoplastics so that the fibers in the prepreg sheets are arranged in different orientations. The third plate is processed by thermoforming in mold to form the top cover. The top cover is formed with a through hole. The bottom cover is arranged at an end of the barrel. The first flange is positioned to a peripheral wall of the barrel by thermoforming. The top cover is arranged at an other end of the barrel. The second flange is positioned to a peripheral wall of the barrel by thermoforming. A receiving space is enclosed by the barrel, the bottom cover, and the top cover.

To achieve the above and other objects, the method to manufacture composite container of the present invention includes the following steps.
(1) Preparing barrel, bottom cover, and top cover: Form a barrel from a first plate by thermoforming, form a bottom cover from a second plate by thermoforming, and form a top cover from a third plate by thermoforming. Each of the first plate, the second plate, and the third plate is formed by a plurality of laminated prepreg sheets arranged in different orientations wherein each of the prepreg sheets is composed a plurality of fibers and is impregnated in thermoplastics so that the fibers in the prepreg sheets are arranged in different orientations. The barrel is hollow barrel-shaped. The bottom cover includes a first bottom and a first flange. The top cover includes a second bottom and a second flange. The first flange axially extends from a fringe of the first bottom. The second flange axially extends from a fringe of the second bottom. The second bottom is axially formed with a through hole.
(2) Connecting bottom cover and top cover to barrel: Make the first flange of the bottom cover and the second flange of the top cover positioned to two ends of a peripheral wall of the barrel by thermoforming to form a composite container.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 and Fig. 1A are illustrations showing a first plate of the present invention;
Fig. 2 to Fig. 4 are illustrations showing procedure of preparing barrel of the present invention;
Fig. 5 is an illustration showing procedure of preparing bottom cover of the present invention;
Fig. 6 is an illustration showing procedure of preparing top cover of the present invention;
Fig. 7 and Fig. 8 are illustrations showing procedure of combining bottom cover and barrel of the present invention;
Fig. 8A is a partial enlargement of Fig. 8;
Fig. 9 is an illustration showing procedure of combining top cover and barrel of the present invention;
Fig. 9A is a partial enlargement of Fig. 9;
Fig. 10 is a profile showing a second embodiment of the present invention;
Fig. 11 is a profile showing a third embodiment of the present invention;
Fig. 12 is a profile showing a fourth embodiment of the present invention;
Fig. 13 is a profile showing a fifth embodiment of the present invention.

### DETAILED DESCRIPTION OF THE PREFERRED EMBODIMENTS

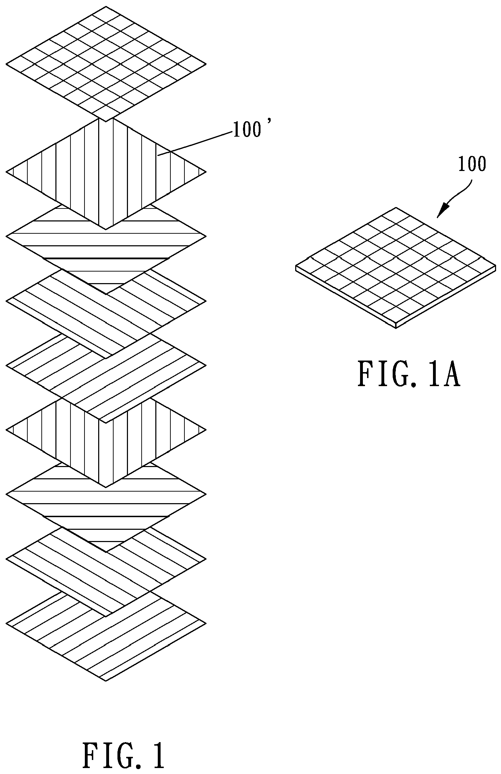

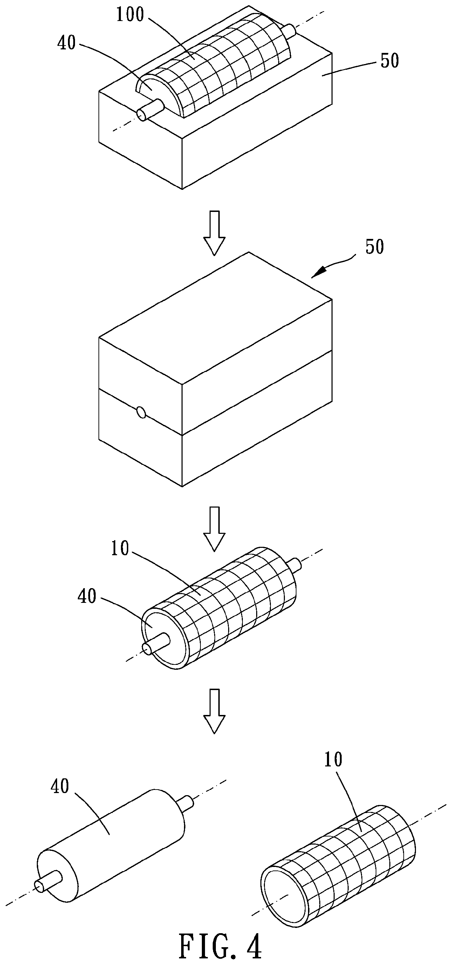

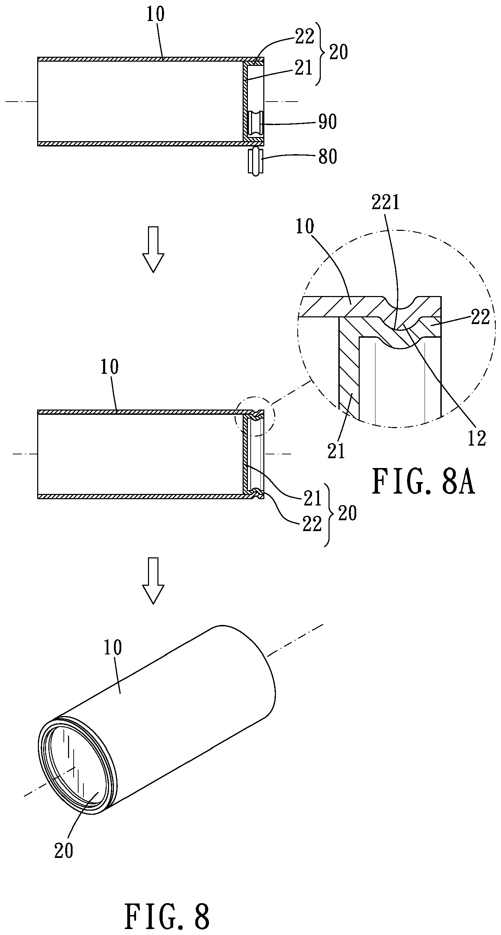

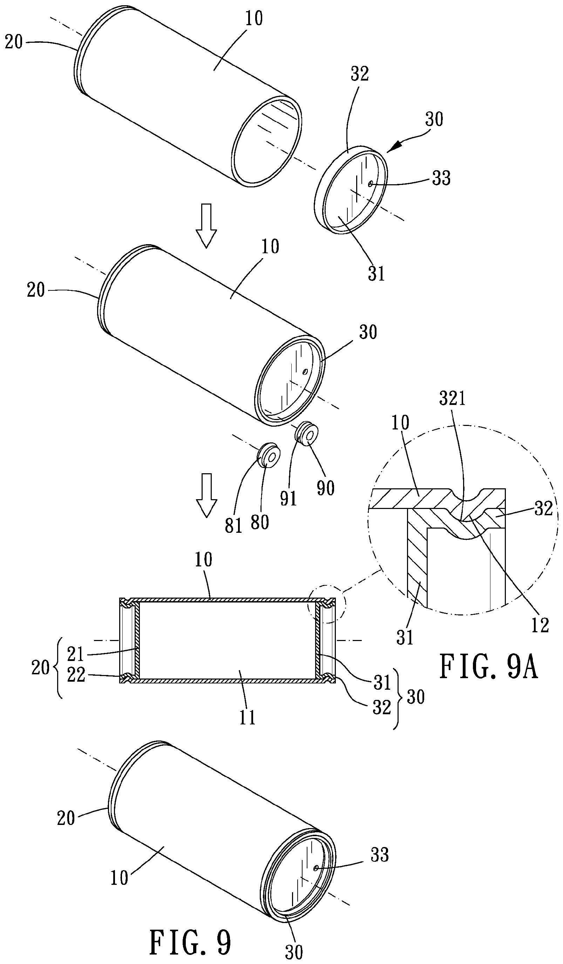

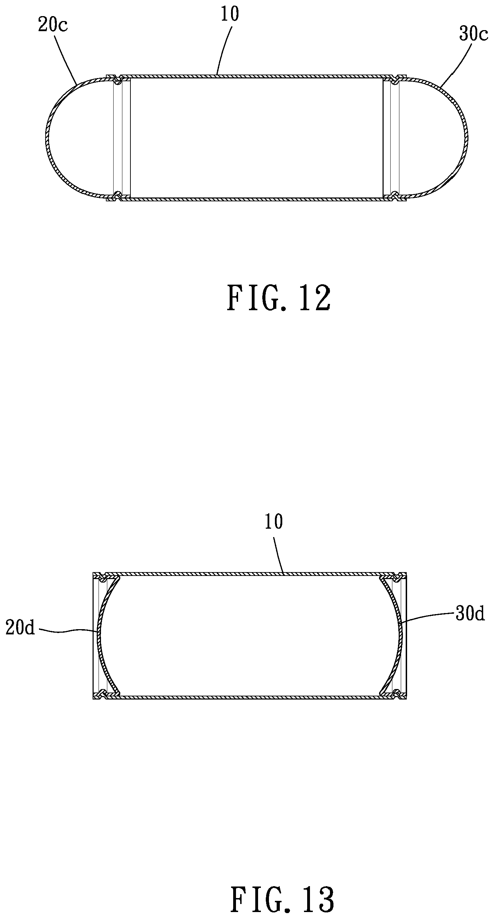

Please refer to Fig. 1 to Fig. 13, the composite container of the present invention includes a barrel 10, a bottom cover 20, 20a, 20b, 20c, 20d, and a top cover 30, 30a, 30b, 30c, 30d.

The barrel 10 is hollow barrel-shaped and formed by a rolled-up first plate 100. The first plate 100 is formed by a plurality of laminated prepreg sheets 100' arranged in different orientations wherein each of the prepreg sheets 100' is composed a plurality of fibers and is impregnated in thermoplastics so that the fibers in the prepreg sheets 100' are arranged in different orientations. The first plate 100 is processed by thermoforming in mold to form the barrel 10. The bottom cover 20, 20a, 20b, 20c, 20d is formed by a second plate 200 and includes a first bottom 21 and a first flange 22. The first flange 22 surrounds the first bottom 21. The second plate 200 is formed by a plurality of laminated prepreg sheets arranged in different orientations wherein each of the prepreg sheets is is composed a plurality of fibers and impregnated in thermoplastics so that the fibers in the prepreg sheets are arranged in different orientations. The second plate 200 is processed by thermoforming in mold to form the bottom cover 20, 20a, 20b, 20c, 20d. The top cover 30, 30a, 30b, 30c, 30d is formed by a third plate 300 and includes a second bottom 31 and a second flange 32. The second flange 32 surrounds the second bottom 31. The third plate 300 is formed by a plurality of laminated prepreg sheets arranged in different orientations wherein each of the prepreg sheets is is composed a plurality of fibers and impregnated in thermoplastics so that the fibers in the prepreg sheets are arranged in different orientations. The third plate 300 is processed by thermoforming in mold to form the top cover 30, 30a, 30b, 30c, 30d. The top cover 30, 30a, 30b, 30c, 30d is formed with a through hole 33. The bottom cover 20, 20a, 20b, 20c, 20d is arranged at an end of the barrel 10. The first flange 22 is positioned to a peripheral wall of the barrel 10 by thermoforming. The top cover 30, 30a, 30b, 30c, 30d is arranged at an other end of the barrel 10. The second flange 32 is positioned to a peripheral wall of the barrel 10 by thermoforming. A receiving space 11 is enclosed by the barrel 10, the bottom cover 20, 20a, 20b, 20c, 20d, and the top cover 30, 30a, 30b, 30c, 30d. In other possible embodiments, a glue layer can be included between the bottom cover and the barrel and between the top cover and the barrel to enhance the engagement.

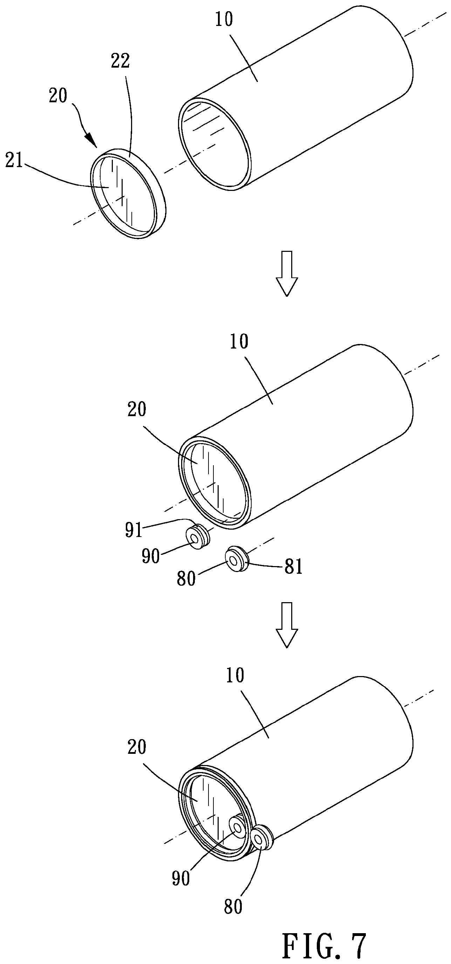

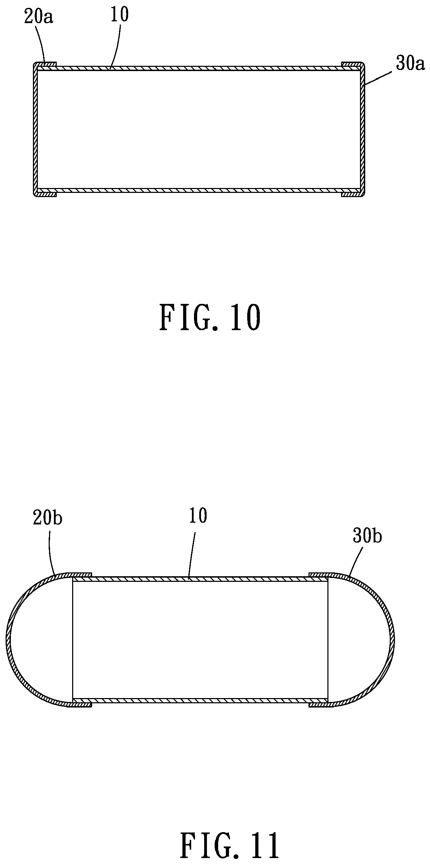

In the present embodiment, as shown in Fig. 7 to Fig. 9, the bottom cover 20 and the top cover 30 are arranged inside the barrel 10. The first flange 22 and the second flange 32 are positioned onto an inner wall of the barrel 10 respectively, and the first flange 22 and the second flange 32 extend away from each other. However, in other embodiments, the first flange and the second flange can extend toward each other, as shown in Fig. 10 to Fig. 12. Besides, the bottom cover 20, 20b and the top cover 30, 30b can be arranged outside the barrel 10, and the first flange 22 and the second flange 32 are positioned onto an outer wall of the barrel 10 respectively, as shown in Fig. 10 and Fig. 11.

In view of the shape of the first bottom and the second bottom, in the present embodiment as shown in Fig. 7 to Fig. 10, each of the first bottom 21 and the second bottom 31 is a flat surface perpendicular to the axial direction of the barrel 10. In other possible embodiments, the first bottom or the second bottom can be semi-sphere, as shown in Fig. 11 to Fig. 13.

Besides, at least one of the first flange 22 and the second flange 32 has an annular groove 221, 321, and the peripheral wall of the barrel 10 has a protruding flange 12. The annular groove 221, 321 and the protruding flange 12 are formed by a first rolling mold 80 with a protrusion 81 and a second rolling mold 90 with a recess 91 clamping the at least one of the first flange 22 and the second flange 32 and the peripheral wall of the barrel 10 and rolling with respect to the at least one of the first flange 22 and the second flange 32 and the peripheral wall of the barrel 10 for thermoforming, as shown in Figs. 7 to 9, 8A, and 9A. Thereby, the bottom cover 20 and the top cover 30 can be positioned on the barrel 10 firmly to prevent from sliding axially. However, the positions of the first rolling mold and the second rolling mold can be exchanged to exchange the positions of the annular groove and the protruding flange.

It is noted that the embodiments in Fig. 10 to Fig. 11 have no annular groove and the protruding flange, but they can still be formed with the annular groove and the protruding flange in the same way if necessary.

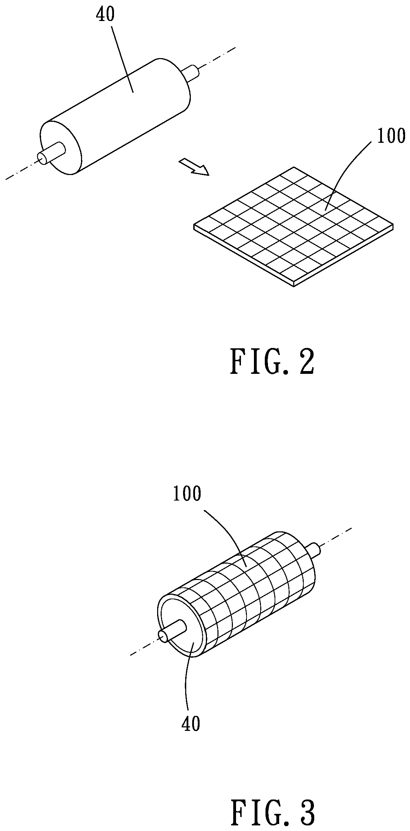

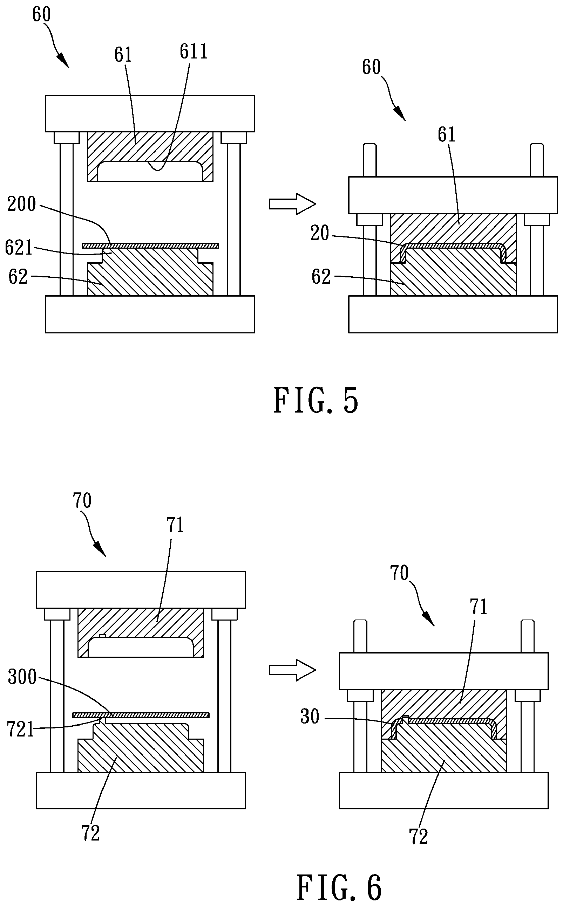

The present invention also provides a method to manufacture composite container including the following steps.
(1) Preparing barrel, bottom cover, and top cover: Form a barrel 10 from a first plate 100 by thermoforming, form a bottom cover 20 from a second plate 200 by thermoforming, and form a top cover 30 from a third plate 300 by thermoforming. Each of the first plate 100, the second plate 200, and the third plate 300 is formed by a plurality of laminated prepreg sheets arranged in different orientations wherein each of the prepreg sheets is composed a plurality of fibers and is impregnated in thermoplastics. For example, Fig. 1 shows the impregnated prepreg sheets 100' are laminated to form the first plate 100. The barrel 10 is hollow barrel-shaped. The bottom cover 20 includes a first bottom 21 and a first flange 22. The top cover 30 includes a second bottom 31 and a second flange 32. The first flange 22 axially extends from a fringe of the first bottom 21. The second flange 32 axially extends from a fringe of the second bottom 31. The second bottom 31 is axially formed with a through hole 33.
   In the present embodiment, the first plate 100 is adhered onto a peripheral surface of a core mold 40, and the core mold 40 with the first plate 100 is thereafter placed into a barrel mold 50 to form the barrel 10 as shown in Fig. 2 to Fig. 4. The second plate 200 and the third plate 300 are processed to form the bottom cover 20 and the top cover 30 by a bottom mold 60 and a top mold 70 respectively as shown in Fig. 5 and Fig. 6. The bottom mold 60 includes an upper part 61 and a bottom part 62 having corresponding mold recess 611 and mold protrusion 621. The second plate 200 is sandwiched between the upper part 61 and the bottom part 62 for thermoforming. Similarly, the top mold 70 also includes an upper part 71 and a bottom part 72 having corresponding mold recess and mold protrusion. The third plate 300 is sandwiched between the upper part and the bottom part for thermoforming. Specifically, the mold protrusion of the top mold 70 is further formed with a protruding bump 721 for forming the through hole of the top cover 30.
(2) Connecting bottom cover and top cover to barrel: Make the first flange 22 of the bottom cover 20 and the second flange 32 of the top cover 30 positioned to two ends of a peripheral wall of the barrel 10 by thermoforming to form a composite container.

In the present embodiment, as shown in Fig. 7 to Fig. 9A, at least one of the first flange 22 and the second flange 32 and the peripheral wall of the barrel 10 are clamped by a first rolling mold 80 and a second rolling mold 90 for thermoforming and rotate with respect to the first rolling mold 80 and the second rolling mold 90. The first rolling mold 80 has a protrusion 81, and the second rolling mold 90 has a recess 91 so that the at least one of the first flange 22 and the second flange 32 is formed with one of the annular groove 221 and a protruding flange, and that the peripheral wall of the barrel 10 is formed with the other one of the annular groove and the protruding flange 12.

In conclusion, the prepregs of the barrel, the bottom cover, and the top cover are connected by heating and exerting pressure, and the annular groove and the protruding flange help enhance the connection. Thus, the procedure is easy and simple, and the product has a sufficient strength of structure. Besides, the top cover and the bottom cover are formed independently from the barrel, so the top cover and the bottom cover can have a delicate and precise contour. In addition, the surface of the composite container is smooth and lacks of slits. On the other hand, the top cover and the bottom cover can be assembled according to needs.

## Claims

1. A composite container including:
a barrel (10), being hollow barrel-shaped and formed by a rolled-up first plate (100), the first plate (100 being formed by a plurality of laminated prepreg sheets (100')arranged in different orientations wherein each of the prepreg sheets (100') is composed of a plurality of fibers and is impregnated in thermoplastics so that the fibers in the prepreg sheets (100') are arranged in different orientations, the first plate (100) being processed by thermoforming in mold to form the barrel (10);
a bottom cover (20), formed by a second plate (200) and including a first bottom (21) and a first flange (22), the first flange (22) surrounding the first bottom (21), the second plate (200) being formed by a plurality of laminated prepreg sheets arranged in different orientations wherein each of the prepreg sheets is composed of a plurality of fibers and is impregnated in thermoplastics so that the fibers in the prepreg sheets are arranged in different orientations, the second plate (200) being processed by thermo forming in mold to form the bottom cover (20);
a top cover (30), formed by a third plate (300) and including a second bottom (31) and a second flange (32), the second flange (32) surrounding the second bottom (31), the third plate (300) being formed by a plurality of laminated prepreg sheets arranged in different orientations wherein each of the prepreg sheets is composed of a plurality of fibers and is impregnated in thermoplastics so that the fibers in the prepreg sheets are arranged in different orientations, the third plate (300) being processed by thermoforming in mold to form the top cover (30);
wherein the top cover (30) is formed with a through hole (33);
wherein the bottom cover (20) is arranged at an end of the barrel (10), the first flange (22) is positioned to a peripheral wall of the barrel (10) by thermo forming, the top cover (30) is arranged at an other end of the barrel (10), the second flange (32) is positioned to a peripheral wall of the barrel (10) by thermo forming, a receiving space (11) is enclosed by the barrel (10), the bottom cover (20), and the top cover (30).

2. The composite container of claim 1, wherein the bottom cover (20) and the top cover (30) are arranged inside the barrel (10), the first flange (22) and the second flange (32) are positioned onto an inner wall of the barrel (10) respectively.

3. The composite container of claim 1, wherein the first flange (22) and the second flange (32) extend away from each other.

4. The composite container of claim 1, wherein the first flange (22) and the second flange (32) extend toward each other.

5. The composite container of claim 1, wherein the bottom cover (20) and the top cover (30) are arranged outside the barrel (10), the first flange (22) and the second flange (32) are positioned onto an outer wall of the barrel (10) respectively.

6. The composite container of claim 1, wherein at least one of the first flange (22) and the second flange (32) has one of a protruding flange and an annular groove (221,321), the peripheral wall of the barrel (10) has the other one of the protruding flange (12) and the annular groove, the protruding flange (12) and the annular groove (221,321) are formed by a first rolling mold (80) with a protrusion (81) and a second rolling mold (90) with a recess (91) clamping the at least one of the first flange (22) and the second flange (32) and the peripheral wall of the barrel (10) and rolling with respect to the at least one of the first flange (22) and the second flange (32) and the peripheral wall of the barrel (10) for thermoforming.

7. The composite container of claim 1, wherein each of the first bottom (21) and the second bottom (31) is a semi-sphere.

8. A method to manufacture composite container, including steps of:
(1) preparing barrel (10), bottom cover (20), and top cover (30): forming a barrel (10) from a first plate (100) by thermo forming, forming a bottom cover (20) from a second plate (200) by thermoforming, forming a top cover (30) from a third plate (300) by thermoforming, each of the first plate (100), the second plate (200), and the third plate (300) being formed by a plurality of laminated prepreg sheets (100') arranged in different orientations wherein each of the prepreg sheets (100') is is composed a plurality of fibers and impregnated in thermoplastics so that the fibers in the prepreg sheets (100') are arranged in different orientations, the barrel (10) being hollow barrel-shaped, the bottom cover (20) including a first bottom (21) and a first flange (22), the top cover (30) including a second bottom (31) and a second flange (32), the first flange (22) axially extending from a fringe of the first bottom (21), the second flange (32) axially extending from a fringe of the second bottom (31), the second bottom (31) being axially formed with a through hole (33);
(2) connecting bottom cover (20) and top cover (30) to barrel: making the first flange (22) of the bottom cover (20) and the second flange (32) of the top cover (30) positioned to two ends of a peripheral wall of the barrel (10) by thermoforming to form a composite container.

9. The method to manufacture composite container of claim 8, wherein the bottom cover (20) and the top cover (30) are arranged inside the barrel (10) respectively, an outer face of each of the first flange (22) and the second flange (32) is positioned to an inner wall of the barrel (10) respectively.

10. The method to manufacture composite container of claim 8, wherein the bottom cover (20) and the top cover (30) are arranged outside the barrel (10) respectively, an inner face of each of the first flange (22) and the second flange (32) is positioned to an outer wall of the barrel (10) respectively.

11. The method to manufacture composite container of claim 8, wherein the first flange (22) and the second flange (32) extend away from each other.

12. The method to manufacture composite container of claim 8, wherein the first flange (22) and the second flange (32) extend toward each other.

13. The method to manufacture composite container of claim 8, wherein at least one of the first flange (22) and the second flange (32) and the peripheral wall of the barrel (10) are clamped by a first rolling mold (80) and a second rolling mold (90) for thermoforming and rotate with respect to the first rolling mold (80) and the second rolling mold (90), the first rolling mold (80) has a protrusion (81), the second rolling mold (90) has a recess (91) so that the at least one of the first flange (22) and the second flange (32) is formed with one of the annular groove (221) and a protruding flange, the peripheral wall of the barrel (10) is formed with the other one of the annular groove and the protruding flange (12).

14. The method to manufacture composite container of claim 8, wherein the first plate (100) is adhered onto a peripheral surface of a core mold (40), the core mold (40) with the first plate (100) is thereafter placed into a barrel mold (50) to form the barrel (10), the second plate (200) and the third plate (300) are processed to form the bottom cover (20) and the top cover (30) by a bottom mold (60) and a top mold (70) respectively, the bottom mold (60) includes an upper part (61) and a bottom part (62) having corresponding mold recess and mold protrusion, the second plate (200) is sandwiched between the upper part (61) and the bottom part (620 for thermoforming; the top mold (70) also includes an upper part (71) and a bottom part (72) having corresponding mold recess and mold protrusion, the third plate (300) is sandwiched between the upper part (71) and the bottom part (72) for thermoforming.
